Europäisches Patentamt

European Patent Office

Office européen des brevets

(11) Veröffentlichungsnummer: **0 344 151 B1**

## (12) EUROPÄISCHE PATENTSCHRIFT

(45) Veröffentlichungstag der Patentschrift :
**23.10.91 Patentblatt 91/43**

(51) Int. Cl.⁵ : **F16L 55/16, F16L 55/18**

(21) Anmeldenummer: **87907411.0**

(22) Anmeldetag : **26.11.87**

(86) Internationale Anmeldenummer :
**PCT/CH87/00160**

(87) Internationale Veröffentlichungsnummer :
**WO 89/03003 06.04.89 Gazette 89/08**

(54) **MITTEL ZUM FERNGESTEUERTEN SCHALUNGSEINBAU BEI DER SANIERUNG VON ROHRLEITUNGEN.**

(30) Priorität : **30.09.87 CH 3808/87**

(43) Veröffentlichungstag der Anmeldung :
**06.12.89 Patentblatt 89/49**

(45) Bekanntmachung des Hinweises auf die
Patenterteilung :
**23.10.91 Patentblatt 91/43**

(84) Benannte Vertragsstaaten :
**AT BE DE FR GB IT LU NL SE**

(56) Entgegenhaltungen :
**EP-A- 0 159 300**
**WO-A-86/04975**
**DE-A- 3 504 935**
**US-A- 1 514 062**

(73) Patentinhaber : **Sika Robotics AG**
**Industriestrasse**
**CH-8627 Grüningen (CH)**

(72) Erfinder : **SIGEL, Alwin**
**Nussberg**
**CH-8418 Schlatt (CH)**

(74) Vertreter : **Schwabe - Sandmair - Marx**
**Stuntzstrasse 16**
**W-8000 München 80 (DE)**

## Beschreibung

Diese Erfindung betrifft ein Einbringgerät zum ferngesteuerten Einbau von Schalungen zur Sanierung von nicht begehbaren Rohrleitungen.

### Problemstellung

Das Problem, das sich bis heute stellte und das mit dieser Erfindung gelöst werden kann, ist die Sanierung von schadhaften Rohrleitungen mit Scherbenbildung, falls der Rohrdurchmesser klein ist und das Rohr zur Reparatur nicht betreten werden kann. Das Reparaturgerät muß also in eine Rohrleitung mit geringem Durchmesser eingeführt sowie ferngesteuert werden können und gegenüber den bekannten Methoden den Vorteil haben, daß auch schwer beschädigte Rohre mit Scherbenbildungen repariert werden können. Die konventionellen Methoden boten nur eine unbefriedigende Lösung, weil es doch oft gerade durch das Auswaschen dazu kam, daß Scherben weggeschwemmt wurden und sich dadurch ein größeres Leck bildete, welches nicht mehr saniert werden konnte.

### Stand der Technik

Nach dem heutigen Stand der Technik werden Sanierungen an leicht beschädigten Rohren in zwei Schritten durchgeführt :

1. Vorbereitung der Sanierung :

Bearbeitung und Reinigung der schadhaften Stellen (Ausbohren, Waschen, Absaugen usw.)

2. Eigentliche Sanierung :

Applikation von Füllmaterialien (Kunststoffe, Kleber, Erzeugnisse der Zementchemie usw.)

Mit diesem traditionellen Vorgehen können, wie erwähnt, nur leichte Beschädigungen behoben werden, nicht aber Fälle, bei denen unter Umständen Scherben oder ganze Rohrteile fehlen.

Aus der US-A-1514062 ist bereits ein Einbringgerät zum Sanieren von nicht begehbaren Rohrleitungen bekannt. Auch dieses bekannte Einbringgerät umfaßt ein Gehäuse zum Tragen eines um das Gehäuse herum zu einem Rohr gebogenen Bleches und zum Einführen in eine Rohrleitung mit dem gebogenen Blech. Das Einbringgerät enthält mehrere in Längsrichtung im Abstand zueinander angeordnete aus dem Gehäuse heraustretende Zapfen, die in entsprechend aufeinander ausgerichteten Löchern in den beiden aufeinandergelegten Randabschnitten des um das Gehäuse herum gebogenen Bleches aufgenommen werden können, um das Blech am Einbringgerät lösbar zu fixieren. Die genannten Zapfen sind gemeinsam an einem in längsaxialer Richtung innerhalb des Einbringgerätes verschiebbar angeordneten Halterungsrohr schwenkbar gehalten, so daß sie bei einer längsaxialen Verschiebung dieses Halterungsrohres im Inneren des Einbringgerätes um ihr innenliegendes Endes verschwenkt werden und dadurch aus den Löchern in den beiden aufeinandergelegten Randabschnitten des um das Gehäuse herumgebogenen Bleches herausgezogen werden können. Bei dieser bekannten Konstruktion sind jedoch keinerlei Maßnahmen getroffen, um ein ungewolltes Abheben der Randabschnitte des Bleches von den jeweiligen Zapfen zu verhindern.

Aus der EP-A-0159300 ist die Konstruktion einer Ausbesserungshülse bekannt, die zum Sanieren von nicht begehbaren Rohrleitungen in diese eingeführt werden kann und zu der zu reparierenden Stelle geführt werden kann. Die Hülse besteht aus einem flexiblen, schlauchförmigen Hauptteil, in dessen Inneren eine zylinderförmige Spiralfeder angeordnet ist, deren Durchmesser verändert werden kann, also beispielsweise verkleinert werden kann, um das schlauchförmige Hauptteil aufzuschieben. Wenn diese Sanierungshülse dann an der betreffenden zu sanierenden Stelle einer Rohrleitung angeordnet ist, wird die in gespanntem Zustand gehaltene Spiralfeder im Inneren des Hauptteils gelöst, wodurch sich der Durchmesser der Spiralfeder vergrößert und dadurch das schlauchförmige Hauptteil gedehnt bzw. gegen die zu sanierende Stelle der Rohrleitung gepreßt wird. Diese bekannte Konstruktion ist daher an die Verwendung eines flexiblen bzw. dehnungsfähigen Sanierungsmaterial gebunden.

### Vorliegende Erfindung

Die Erfindung betrifft nun ein Einbringgerät gemäß Anspruch 1, mit dessen Hilfe ein gewölbtes Edelmetallblech in das schadhafte Rohr eingebracht werden kann, indem das Edelmetallblech derart gekrümmt wird, daß es ebenfalls ein Rohr bildet, jedoch mit einem kleineren Durchmesser. Dieses zusammengerollte Blech bringt man nun an diejenige Stelle in dem zu sanierenden Rohr, welches schadhaft ist und von welcher unter Umständen die Rohrscherben bereits weggeschwemmt wurden. An dieser Stelle angelangt wird das zusammengehaltene Blech freigegeben, woraufhin dieses federartig aufspringt und dadurch ein Rohr mit größerem Durchmesser bildet. Dieses Blechteil wird durch das bestehende Rohr jedoch am weiteren Aufspringen gehindert und bildet dadurch eine Verschalung der defekten Stelle innerhalb des zu sanierenden Rohres. Durch die bestehenden Löcher in dem Edelmetallblech wird nun ein Abdichtmittel hindurch gepreßt, welches den Hohlraum zwischen dem Erdreich und der Verschalung ausfüllt. Die Verschalung, bestehend aus dem gekrümmten Edelmetallblech, kann nun ohne weiteres im Rohr zurückgelassen werden, weil das gewellte Edelmetall vollkommen korrosionsfest ist. Aus diesem Grunde spricht man in einem solchen Fall in der Fachwelt von einer verlorenen Schalung. In extremen Fällen, bei welchen ganze Rohrleitungen weggeschwemmt wurden, können auch mehrere Edelmetall-Schalen eingesetzt werden, welche dann dachziegelartig aneinander und sich überlappend angeordnet werden, so daß dadurch ein fertiges Rohr gebildet werden kann.

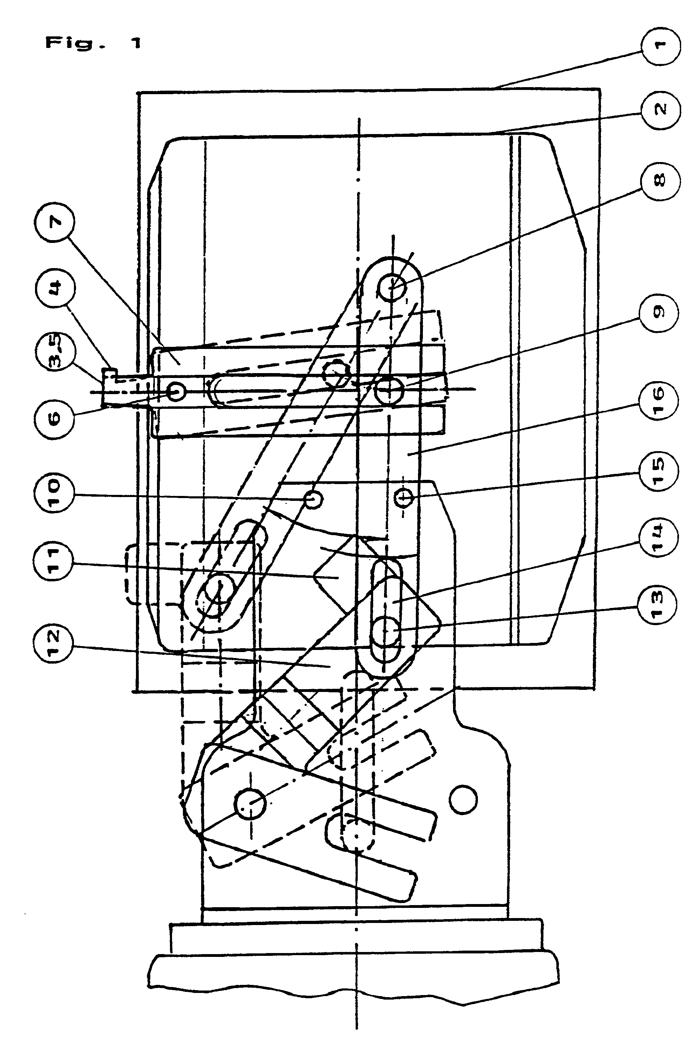

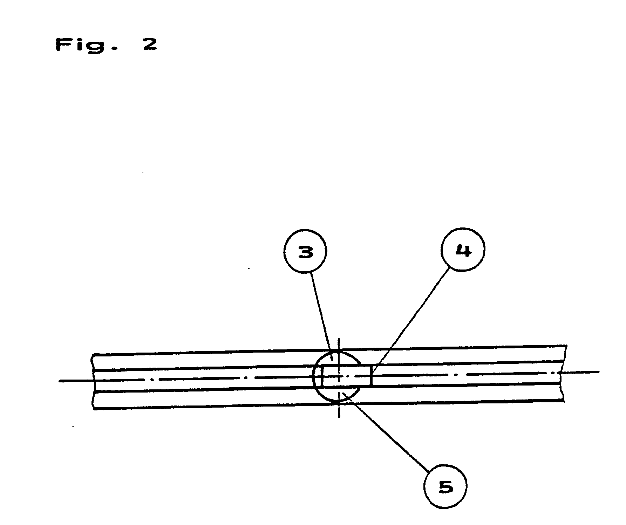

Das Einbringgerät nach der Erfindung dient also zur Einführung, Positionierung und Applikation einer Metallverschalung in ein zu sanierendes Rohr. Es besteht aus einem Gehäuse 2 (Fig. 1) und einem Mechanismus zur Festhaltung des Bleches. Das Gehäuse weist oben zwei Nocken 3 und 5 (Fig. 2) mit einem halbkreisförmigen Querschnitt auf, die Teil des Verriegelungsmechanismus sind. Das Einbringgerät wird mittels den Bohrungen 15 und 10 an einem vom gleichen Erfinder bereits schon früher patentierten Kanal-Sanierungsroboter befestigt––– kann aber auch in Verbindung mit herkömmliche Schlitten verwendet oder von Hand bedient werden. Zu Steuer- und Überwachungszwecken können auf der vorderen Seite des Einbringgerätes (in Fig. 1 rechts) Verlängerungsarme angebracht werden, auf welche dann eine Fernsehkamera montiert wird. Diese Kamera schaut in umgekehrter Fahrtrichtung in das Einbringgerät, welches am Boden geöffnet ist, so daß die darum gewickelte Edelmetallverschalung sichtbar wird. Diese wiederum ist mit Löchern versehen, welche später für das Hindurchpressen des Abdichtungsmaterials verwendet werden. Durch genau diese Löcher kann nun aber mit Hilfe der Kamera gesehen werden, ob man bereits schon über die schadhafte Stelle am Rohr gefahren ist, und hat somit die Möglichkeit, an der richtigen Stelle anzuhalten und die Edelmetallverschalung abzuwerfen.

Die Verschalung besteht somit aus einem Edelmetallblech 1 (Fig. 1), welches um das Einbringgerät herum gewickelt wird. Dieses biegbare Blech verfügt an beiden Enden über mindestens ein Loch, so daß diese über den Zapfen 3, 4, 5 gestülpt werden können, welcher sich auf dem Rücken des Einbringgerätes befindet. Ein selbständiges Wieder-Abwickeln, wonach das wieder auffedernde Blech strebt, wird dadurch verhindert, daß ein kleiner Riegel 4 aus dem Zapfen herausgefahren werden kann. Um das Aufwickeln des Edelmetallbleches zu erleichtern, wird es von vornherein vorgebogen und in eine fixe Krümmung gebracht. Dabei ist zu beachten, daß die Vorbiegung nicht zu stark ist, so daß die Verschalung, einmal im Rohr angebracht, immer noch über die notwendige Spannkraft verfügt und nach außen gegen das bestehende Rohr drückt. Es muß also immer noch Kraft aufgewendet werden, um das Blech auf einen so kleinen Radius zu bringen, und es auf das Einbringgerät zu wickeln. Bei einem Rohrdurchmesser von ca. 200 mm wird der Durchmesser der Verschalung zur Einführung ins Leitungsinnere auf ca. 160 mm reduziert. Nach dem Abwerfen vergrößert sich der Durchmesser der Verschalung durch die Spannkraft wieder und sie klemmt sich an der abgeworfenen Stelle im schadhaften Rohr fest. Das Abwerfen der Verschalung wird dadurch ausgelöst, daß der Riegel 4 (Fig. 2) im Zapfen 3, 4, 5, auf dem Rücken des Einbringgerätes wieder zurückgezogen wird, wodurch das Blech, welches an beiden Enden durch seine Löcher über diesen Zapfen gestülpt war, durch die Eigenfederung wieder selbständig aufspringen und sich vom Einbringgerät lösen kann. Zur Herstellung der Verschalung wurde der Werkstoff Hastelloy, eine Nickellegierung, verwendet. Der Einsatz dieses Werkstofes zur Rohrsanierung ist neu. Er wurde bis dahin, seiner hohen Säurebeständigkeit wegen, z.B. auch für Rauchgasreinigungsanlagen verwendet. Dieses Hastelloy wird Chromstahl, PVC oder Polyäthylen aufgrund der besonderen Materialeigenschaften vorgezogen.

Hastelloy verfügt nämlich praktisch über denselben Ausdehnungskoeffizienten wie Beton und ist den erwähnten Materialien hinsichtlich Spannkraft, Raumfestigkeit, Druckfestigkeit, Temperaturausdehnungskoeffizienten, Reinigungsfestigkeit ("Reinigungsdüsenfestigkeit"), Säurebeständigkeit und Unverrottbarkeit bei weitem überlegen. Die Standzeit von Hastelloy beträgt entsprechend auch 20 bis 25 Jahre. (Als Vergleich : bei Chromstahl vielleicht etwa 5 Jahre.)

Zum Mechanismus im Innern des Einbringgerätes ist folgendes zu sagen : Sein Zweck ist das Vorschieben und Zurückziehen des Riegels 4 (Fig. 1 und 2) im Zapfen 3 und 5.

Dazu ist ein Hebel 16 so an der Achse 8 drehbar befestigt, daß der auf ihm befindliche Nocken 9 eine kreisförmige Bewegung ausführen kann. Dieser Hebel 16 wird durch einen T-förmigen Steuerkopf 12 in Bewegung versetzt, welcher wiederum seinerseits von der erwähnten und bereits patentierten Sanierungsmaschine gesteuert wird.

Das überhöhte hintere Ende 11 des Steuerkopfes 12 dient beim Öffnen des Verriegelungsmechanismus zum Abwerfen der Verschalung. Dies heißt, bei der Lösung der Verriegelung muß das T-Stück 12 ohnehin hinauffahren, um den Riegel 4 hineinziehen zu können. Somit schiebt das T-Stück 12 mit seiner Erhöhung 11 die beiden Enden des umwickelten Bleches über den Zapfen 3, 4, 5 nach oben, so daß es abspringen kann. Vom T-Stück 12 aus wird die Bewegung mittels der Verbindungsstelle 13 auf den Hebelarm 16 übertragen. Das T-Stück 12 ist an der Verbindungsstelle 13 so am Hebelarm 16 befestigt, daß er innerhalb der Aussparung 14 frei beweglich ist, was eine kreisförmige Bewegung des Hebelarmes 16 erlaubt. Die Kraftübertragung erfolgt dann mit dem Nocken 9 vom Hebelarm 16 auf den stimmgabelförmigen Verriegelungsmechanismus, wobei der Riegel 4 (siehe auch Fig. 2) durch die Bewegung der "Stimmgabel" die Verriegelung öffnet oder schließt. In Fig. 1 sind die beiden Zustände des Verriegelungsmechanismus dargestellt:

Die ausgezogenen Linien bezeichnen den geschlossenen Zustand und die gestrichelten Linien den offenen Zustand. Der stimmgabelförmige Verriegelungsteil ist lediglich am Punkt 6 am Gehäuse drehbar befestigt und unten offen. Die einfache Konstruktionsweise mit der nach unten geöffneten "Stimmgabel" erleichtert gegebenenfalls ein Austauschen dieses Geräteteils, indem es einfach abgeschraubt und nach oben gezogen werden kann.

Das hier beschriebene Einbringgerät wird, wie erwähnt, entweder am patentierten Kanalsanierungsroboter (oder an einem herkömmlichen Schlitten) befestigt und durch diesen geöffnet oder geschlossen, indem der Roboter das T-Stück 12 hinauf oder hinunter schiebt. In der Zeichnung Fig. 1 sind somit auf der linken Seite des beschriebenen Einbringgerätes auch Teile des erwähnten Roboters sichtbar. Dieser wird mit dem aufmontierten Einbringgerät in das zu reparierende Leitungsrohr eingeführt und ferngesteuert an die defekte Stelle gebracht. In einem weiteren Schritt wird nach Abwurf des Edelmetallbleches mittels Düsen das Abdichtungsmaterial, z.B. Epoxit, appliziert. Dies geschieht dadurch, indem das Abdichtungsmaterial durch die in der Verschalung vorhandenen Löcher hindurchgepreßt wird, und sich zwischen der Verschalung in dem umliegenden Erdreich ausbreitet. Auf diese Art wird eine dauerhafte Abdichtung erreicht.

Mit der vorliegenden Erfindung ist es somit gelungen, ein altes, beinahe unlösbares Problem zu bewältigen. Während bis jetzt bei Scherbenbildung in Rohrleitungen jeweils das ganze Rohr mit langen Gräben wieder freigelegt werden mußte, um es durch ein neues zu ersetzen, kann es heute mit dieser Erfindung elegant wieder saniert werden. Auf diese Art können auch ungeheure Kosten eingespart werden. Dies ist besonders dann der Fall, wenn die defekte Leitung z.B. unter einem Gebäude hindurchgeht, wo sie nicht freigelegt werden kann.

## Patentansprüche

1. Einbringgerät zum Sanieren von nicht begehbaren Rohrleitungen, mit einem Gehäuse (2) zum Tragen eines um das Gehäuse herum zu einem Rohr gebogenen Bleches (1) aus korrosionsbeständigem Metall und zum Einführen in eine Rohrleitung mit dem gebogenen Blech, und mit wenigstens einem aus dem Gehäuse (2) heraustretenden Zapfen (3, 4, 5) zur Aufnahme in entsprechenden aufeinander ausgerichteten Löchern in den beiden aufeinandergelegten Randabschnitten des um das Gehäuse (2) herumgebogenen Bleches (1), um das Blech am Einbringgerät lösbar zu fixieren, welches Einbringgerät in der Rohrleitung zum Freigeben des gebogenen Bleches (1) betätigbar ist, so daß sich das Blech durch seine Elastizität an die innere Oberfläche der Rohrleitung anlegt, dadurch **gekennzeichnet**, daß in dem aus dem Gehäuse (2) heraus vorstehenden Zapfen (3, 5) ein Riegelelement (4) angeordnet ist, das seitlich aus dem Zapfen (3, 5) herausbewegbar ist, um den Rand des Loches im Blech (1) zu übergreifen und so das Lösen der Randabschnitte des Bleches von dem Zapfen zu verhindern, und daß ein Abstoßelement (11) vorhanden ist, welches neben dem Zapfen (3, 5) aus dem Gehäuse (2) herausbewegbar ist, um die Randabschnitte des Bleches (1) nach Zurückziehen des Riegelelementes (4) von dem Zapfen (3, 5) abzustreifen.

2. Einbringgerät nach Anspruch 1, dadurch gekennzeichnet, dass das Riegelelement (4) an einem Hebel (7) angeordnet ist, der um eine gehäusefeste Achse (6) schwenkbar ist und an dem ein Bewegungsübertragungselement (16) angreift, das von einem das Abstosselement (11) tragenden Glied (12) bewegbar ist.

3. Einbringgerät nach Anspruch 2, dadurch gekennzeichnet, dass das Bewegungsübertragungselement (16) ein zweiter Hebel ist, der um eine zweite gehäusefeste Achse (8) schwenkbar ist und der mit dem das Riegelelement (4) tragenden Hebel (7) durch eine Stift-Schlitz-Verbindung gekuppelt ist.

4. Einbringgerät nach Anspruch 3, dadurch gekennzeichnet, dass der das Riegelelement (4) tragende Hebel (7) ein zweiarmiger Hebel ist, der an einem Arm das Riegelelement trägt und dessen anderer Arm gegabelt ist und zwischen den Gabelschenkeln einen auf dem zweiten Hebel (16) angeordneten Stift (9) aufnimmt.

5. Einbringgerät nach Anspruch 3 oder 4, dadurch gekennzeichnet, dass das das Abstosselement (11) tragende Glied (12) ein dritter schwenkbarer Hebel ist, mit dem der zweite Hebel (16) durch eine zweite Stift-Schlitz-Verbindung gekuppelt ist.

6. Einbringgerät nach einem der Ansprüche 2 bis 5, dadurch gekennzeichnet, dass das Gehäuse (2) an einem Rohrleitungssanierungsfahrzeug anbringbar ist und das das Abstosselement (11) tragende Glied (12) mit einer in dem Fahrzeug angeordneten beweglichen Schubstange kuppelbar ist.

7. Einbringgerät nach einem der Ansprüche 1 bis 6, dadurch gekennzeichnet, dass das Gehäuse (2) an einer Seite eine Fernsehkamera trägt.

## Claims

1. Insertion device for repairing inaccessible pipes comprising : a casing (2) which carries a curved sheet (1) of corrosion resistant metal around itself to the pipe and which enters the pipe with said curved sheet ; at least one pin (3, 4, 5) which projects from said casing (2) for accommodation in the corresponding matching and aligned holes in both of the mating cut edges of said sheet (1) surrounding said casing (2) by means of which said sheet is detachable from the insertion device and said curved sheet (1) can be thereby released in the piping by remote actuation so that by virtue of its elasticity it lies on the inner surface of the pipe ; a locking element (4), which is arranged in said pin (3, 5) projecting from said casing (2), which can be moved laterally together with said pin (3, 5) in order to overlap the edge of the hole in said sheet (1) and in so doing prevent the release of the cut edge of said sheet by said pin (3, 5) ; a thrust element (11) which is arranged, in addition to said pin (3, 5), to project out of the said casing (2) in order that the cut edge of the sheet (1) can be cleared after withdrawal of the said locking element (4) from said pin (3, 5).

2. Apparatus according to claim 1 wherein said locking element (4) is fitted to a lever (7) which can rotate about an axis fixed relative to the said casing and to which a movement transmission element (16) is engaged that in the first instance is moved by the supporting limb (12) of said thrust element (11).

3. Apparatus according to claim 2 wherein said movement transmission element (16) acts as a second lever which rotates about a second axis (8) fixed relative to the said casing and to this said supporting lever (7) of said locking element (4) is coupled by means of a split pin coupling.

4. Apparatus according to claim 3 wherein said supporting lever (7) of said locking element (4) acts as a two armed lever on one arm of which said locking element is supported and the other arm is forked, between the prongs of which one of the pins (9) of said second lever (16) is seated.

5. Apparatus according to claims 3 or 4 wherein said supporting limb (12) of said thrust element (1) acts as a third movable lever which is coupled with said second lever (16) by means of a second split pin coupling.

6. Apparatus according to claims 2 through 5 wherein said casing (2) can be mounted on a pipe maintenance vehicle and that said supporting limb (12) of said thrust element (11) is coupled to a movable torque bar fitted to the vehicle.

7. Apparatus according to claims 1 through 6 wherein said casing (2) carries a television camera on the side.

## Revendications

1. Moyen pour commander à distance l'introduction d'un revêtement pour la réparation de conduites, comportant une carcasse (2) qui supporte une tôle (1) en métal résistant à la corrosion, cintrée en forme de tuyau autour de cette carcasse, laquelle est destinée à être introduite dans une conduite avec la tôle cintrée, et comportant par ailleurs au minimum un tenon (3, 4, 5) sortant de la carcasse (2) et s'insérant dans les trous correspondants, ajustés les uns au-dessus des autres, des deux bords superposés de la tôle (1) cintrée autour de la carcasse (2), ce tenon permettant de fixer la tôle de manière amovible sur le présent moyen de commande, lequel moyen peut être actionné dans la conduite pour libérer la tôle cintrée (1), de façon à ce que celle-ci, en raison de son élasticité, vienne s'appliquer sur la surface intérieure de la conduite, **caractérisé** en ce que le tenon (3, 5) sortant de la carcasse (2) comporte un élément de verrouillage (4) qui peut sortir latéralement du tenon (3, 5) et déborde sur le bord du trou pratiqué dans la tôle (1), évitant ainsi que les bords de la tôle ne glissent hors du tenon, et en ce qu'un dispositif de dégagement (11) est prévu, lequel peut être manoeuvré hors de la carcasse (2) à côté du tenon (3, 5) afin de dégager les bords de la tôle (1) du tenon (3, 5), une fois que l'élément de verrouillage (4) est rentré.

2. Moyen selon la revendication 1, caractérisé en ce que l'élément de verrouillage (4) est fixé sur un levier (7) pivotant sur un axe (6) solidaire de la carcasse, sur lequel agit un élément de transmission du mouvement (16) mû par un élément porteur (12) du dispositif de dégagement (11).

3. Moyen selon la revendication 2, caractérisé en ce que l'élément de transmission de mouvement (16) est constitué par un deuxième levier qui s'articule autour d'un deuxième axe (8) solidaire de la carcasse, et qui est couplé au levier (7) de l'élément de verrouillage (4) par un assemblage goupille et fente.

4. Moyen selon la revendication 3, caractérisé en ce que le levier (7) de l'élément de verrouillage (4) est un levier à deux bras, dont l'un porte l'élément de verrouillage et dont l'autre a la configuration d'une fourche entre les bras de laquelle vient s'insérer une goupille (9) appartenant au second levier (16).

5. Moyen selon la revendication 3 ou 4, caractérisé en ce que l'élément porteur (12) du dispositif de dégagement (11) est un troisième levier pivotant, couplé au second levier (16) par un second assemblage à goupille et fente.

6. Moyen selon l'une des revendications 2 à 5, caractérisé en ce que la carcasse (2) peut être montée sur un véhicule de réparation des conduites et en ce que l'élément porteur (12) du dispositif de dégagement (11) peut être couplé à une bielle mobile montée sur ce véhicule.

7. Moyen selon l'une des revendications 1 à 6, caractérisé en ce que la carcasse (2) est équipée sur un côté d'une caméra.

**Fig. 1**

Fig. 2